# EUROPÄISCHE PATENTSCHRIFT

(11) **EP 1 383 190 B1**
(45) Veröffentlichungstag und Bekanntmachung des Hinweises auf die Patenterteilung: **08.11.2006**
(21) Anmeldenummer: 02014557.9
(22) Anmeldetag: 01.07.2002
(51) Int. Cl.: H01M 8/04, H01M 8/06

(54) **Regelung des Wasserhaushalts in Brennstoffzellensystemen**
Controlling the water balance in fuel cell systems
Procédé de réglage de la répartition d'eau dans des systèmes de piles à combustible

(43) Veröffentlichungstag der Anmeldung: 21.01.2004
(73) Patentinhaber: SFC Smart Fuel Cell AG, 85649 Brunnthal-Nord (DE)
(72) Erfinder: Preissner, Marcus, Dr., 81543 München (DE); Müller, Jens, Dr., 81827 München (DE); Böhm, Christian, 85636 Siegertsbrunn (DE); Harbusch, Volker, 81371 München (DE)
(74) Vertreter: Grünecker, Kinkeldey, Stockmair & Schwanhäusser Anwaltssozietät

(56) Entgegenhaltungen:
- EP-A- 1 035 609
- EP-A- 1 083 617
- DE-A- 10 040 088
- DE-A- 19 944 121
- DE-A- 19 954 546
- US-A- 5 141 823
- US-A1- 2001 028 968

## Beschreibung

### Gebiet der Erfindung

Die Erfindung betrifft ein Verfahren zur Steuerung des Fluidhaushalts in einem Anodenkreislauf eines Brennstoffzellensystems. Bei diesem Verfahren werden wenigstens die kathodenseitig abgegebene Gase in einer Kondensationseinrichtung gekühlt, um Flüssigkeit auszukondensieren und die auskondensierte Flüssigkeit dem Anodenkreislauf des Brennstoffzellensystems zugeführt. Eine aktive Kühlung des Anodenkreislaufs ist nicht erforderlich.

### Stand der Technik

Zahlreiche Brennstoffzellen-Systeme verwenden anodenseitig anstelle eines reinen Brennstoffs ein i.d.R. mit Wasser verdünntes Brennstoffgemisch, das beim Durchgang durch die Brennstoffzelle abgereichert wird. Beispiele für solche Brennstoffe sind Methanol, Ethanol, Trioxan, Dimethoxymethan, Trimethoxymethan, Dimethylether. Die Abreicherung ist aber meistens unvollständig, so dass am anodenseitigen Auslass auch unverbrauchter Brennstoff abgegeben wird. Damit auch dieser unverbrauchte Brennstoff verwertet und damit auf eine externe Wasserzufuhr verzichtet werden kann, wird eine anodenseitige Kreislaufströmung betrieben, bei der das abgereicherte Brennstoffgemisch durch Zudosieren von Brennstoff wieder angereichert und der Anodenseite wieder zugeführt wird.

Bei dieser Kreislaufströmung handelt es sich allerdings nicht um einen geschlossenen Kreislauf: zum einen müssen Reaktionsprodukte (Abfallstoffe) aus dem Kreislauf entfernt und verbrauchter Brennstoff nachgeliefert werden, zum anderen müssen Wasserverluste kompensiert werden, die u.a. dadurch entstehen, dass Wasser von der Anodenseite zur Kathodenseite gelangt (Water Drag) und mit den Abgasen abgegeben wird.

Um also die Wassermenge im System konstant zu halten bzw. um Abweichungen davon korrigieren zu können, muss ein Teil des kathodenseitig anfallenden Wassers zurückgehalten und dem Anodenkreislauf in flüssiger Form wieder zugeführt werden. Die bei der Abgasabfuhr tatsächlich abgegebene Wassermenge sollte exakt der Menge an Wasser entsprechen, die als Reaktionsprodukt gebildet wird bzw. mit den Kathodengasen zugeführt wird.

Die Wasserabfuhr aus dem System erfolgt in Form von mit Wasserdampf gesättigten Abgasen und in flüssiger Form, wobei letzteres einfach dem Fluidkreislauf wieder zugeführt werden kann. Ohne weitere Maßnahmen würde allerdings aufgrund der Wärmeentwicklung im System abgasseitig mehr Wasserdampf anfallen, als zur Wahrung einer konstanten Wassermenge abgegeben werden dürfte.

Um die als Wasserdampf anfallende Menge an Wasser zu reduzieren und eine ausgeglichene Wasserbilanz zu erreichen, wird herkömmlicherweise die Arbeitstemperatur des Systems soweit herabgesetzt, bis die durch die Abgase mitgeführte Menge an Wasserdampf exakt der überschüssigen Wassermenge (d.h. des als Reaktionsprodukt gebildeten Wassers bzw. des von außen, z.B. bei der Luftzufuhr, zugeführten Wassers) entspricht.

Zum Kühlen der Brennstoffzelle bietet sich die anodenseitige Kreislaufströmung an, die nach Abtrennen der Abgase durch einen Wärmetauscher geführt wird, bevor sie der Anode wieder zugeführt wird.

Die zum Erreichen einer ausgeglichenen Wasserbilanz erforderliche Systemtemperatur ist dabei aber oft so niedrig und damit die Temperaturdifferenz zur Umgebung so gering, dass eine ausreichende Wärmeabfuhr nur durch entsprechend groß dimensionierte und durch leistungsfähige Lüfter unterstützte Wärmetauscher erreicht werden kann. Bei Ansteigen der Umgebungstemperatur kann die für den Wärmeaustausch entscheidende Temperaturdifferenz so gering werden, dass auch diese Maßnahmen nicht ausreichen und das System abgeschaltet werden muss.

Druckschriften US 5141823, DE 10040088 und US 2001/028968 zum Stand der Technik beschreiben Anordnungen zur Regelung des Fluidhaushalts in Brennstoffzellensystemen.

### Beschreibung der Erfindung

Angesichts dieser Nachteile ist es eine Aufgabe der Erfindung, verbesserte Verfahren zur Steuerung des anodenseitigen Fluidhaushalts von Brennstoffzellen-Systeme bereitzustellen, die einen Betrieb auch bei höheren Umgebungstemperaturen zulassen. Ferner ist es eine Aufgabe der Erfindung, entsprechende Brennstoffzellen-Systeme bereitzustellen.

Diese Aufgaben werden durch die Verfahren mit den Schritten der Ansprüche 1 und 2 bzw, durch das Brennstoffzellensystem mit den Merkmalen von Anspruch 5 gelöst. Vorteilhafte Weiterbildungen der erfindungsgemäßen Verfahren/Systeme sind in den Unteransprüchen angegeben.

Beim erfindungsgemäßen Verfahren zur Steuerung des Fluidhaushalts in einem Anodenkreislauf eines Brennstoffzellensystems wird eine Messgröße ermittelt, die charakteristisch ist für die Flüssigkeitsmenge und/oder Änderungen der Flüssigkeitsmenge im Brennstoffzellensystem; in Abhängigkeit von der ermittelten charakteristischen Messgröße wird die Kühlleistung einer Kondensationseinrichtung und/oder der kathodenseitige Volumenstrom eingestellt; kathodenseitig abgegebene Gase werden in der Kondensationseinrichtung gekühlt, um Flüssigkeit auszukondensieren und diese in den Anodenkreislauf des Brennstoffzellensystems einzuspeisen. In einer alternativen Variante werden auch die anodenseitig abgegebenen Gasen gekühlt, und zwar entweder gemeinsam mit den kathodenseitig abgegebenen Gasen, oder in einer eigenen Kondensationseinrichtung. Obwohl die anodenseitig (pro Zeiteinheit) anfallende Menge an Wasserdampf i.d.R. deutlich geringer ist, als die kathodenseitige, weist das anodenseitig abgegebene Gas einen höheren Brennstoffanteil auf, der durch die Kondensation wenigstens teilweise rückgewonnen werden kann.

Im Gegensatz zur herkömmlichen Steuerung des Fluidhaushalts über die aktive Kühlung des Anodenkreislaufs, bei der die Anodenströmung und damit indirekt die gesamte Brennstoffzelle soweit abgekühlt wird, dass der Flüssigkeitsanteil der an den Ausgängen abgegebenen Fluide zur Aufrechterhaltung der Flüssigkeitsbilanz ausreichend hoch ist, wird erfindungsgemäß der Flüssigkeitsanteil des an der Kathode ausgegebenen Fluids aktiv erhöht, um die Flüssigkeitsbilanz auszugleichen. Die Temperatur der Anodenströmung (bzw. der gesamten Brennstoffzelle) wird nicht geregelt, sondern stellt sich automatisch ein. Sie hat also bei der erfindungsgemäßen Steuerung des Fluidhaushalts die Rolle eine abhängigen Größe, während sie herkömmlicherweise als Regelgröße (unabhängige Variable) dient.

Die Erfindung hat nicht nur den Vorteil, dass ein aktives Kühlen der Brennstoffzelle (also beispielsweise des Anodenkreislaufs) nicht mehr erforderlich ist. Vielmehr stellt sich beim erfindungsgemäßen Verfahren über das ganze System ein höheres Temperaturniveau ein, so dass die Temperaturunterschiede zwischen den Fluiden und der Umgebung beim erfindungsgemäßen Verfahren größer sind, als beim herkömmlichen Verfahren mit Kühlung des Anodenkreislaufs. Wegen der größeren Temperaturunterschiede kann Wärme effektiver an die Umgebung abgegeben werden, so dass die Wärmetauscher der Kühleinrichtungen kleiner dimensioniert werden können und/oder den Wärmetausch aktiv unterstützende Vorrichtungen, wie z.B. Lüfter, mit weniger Energieaufwand betrieben werden können.

Zum Separieren des Kathodenfluids in eine Gas- und einen Flüssigkeitsanteil kann der Kondensationseinrichtung eine entsprechende Trenneinrichtung vor- oder nachgeschaltet sein. Die Kondensationseinrichtung kann aber auch so ausgebildet sein, dass sie beide Aufgaben erfüllt, also (1) Erhöhen des Flüssigkeitsanteils, und (2) Trennen der Gasphase von der Flüssigkeit. Dasselbe trifft auch auf die Kondensationseinrichtungen der nachfolgend beschriebenen Weiterbildungen des erfindungsgemäßen Verfahrens zu.

Dies ist besonders vorteilhaft, wenn die kathodenseitig und anodenseitig abgegebene Fluide nach Verlassen der Brennstoffzelle zusammengeführt werden und der Gasanteils der zusammengeführten Fluide in einer gemeinsamen Kondensationseinrichtung gekühlt werden, um Flüssigkeit auszukondensieren und dem Anodenkreislauf des Brennstoffzellensystems zuzuführen. In diesem Fall ist nur eine Kondensationseinrichtung notwendig, so dass der zum Durchführen dieser bevorzugten Weiterbildung des erfindungsgemäße Verfahrens erforderliche Aufwand nicht größer ist, als wenn nur die Kathodenfluide die Kondensationseinrichtung durchströmen.

Da äußere Einflüsse (z.B. Umgebungstemperatur) und intrinsische Prozesse (z.B. Alterungsphänomene) zu Änderungen der Betriebseigenschaften führen können, die auch den Flüssigkeitshaushalt betreffen können, ist eine Kontrollmöglichkeit erforderlich, um die Menge an auskondensierter Flüssigkeit zu steuern. Vorzugsweise kann dies durch ein Steuern der Kühlleistung der Kondensationseinrichtung(en) erfolgen, beispielsweise durch Lüftungseinrichtungen, mit denen die Stärke des Wärmeaustauschs mit der Umgebung gesteuert werden kann.

Solche Änderungen im Flüssigkeitshaushalt können mit der Erfindung frühzeitig erkannt werden, indem eine für Änderungen der Flüssigkeitsmenge im Brennstoffzellensystem charakteristische Messgröße ermittelt wird, und die Kühlleistung der Kondensationseinrichtung(en) in Abhängigkeit von der ermittelten charakteristischen Messgröße eingestellt wird. Zusätzlich oder alternativ dazu können Korrekturen am Flüssigkeitshaushalt auch durch Einstellen des Volumenstroms der kathodenseitigen Fluidzufuhr in Abhängigkeit von der ermittelten charakteristischen Messgröße durchgeführt werden.

Die Änderungen der Flüssigkeitsmenge können beispielsweise mit Hilfe eines Füllstandssensors im Anodenkreislauf verfolgt werden, ohne dass dabei der Absolutwert einer Änderung ermittelt werden muss. Ein solcher Füllstandssensor kann in einem Steigrohr vorgesehen sein, oder alternativ dazu und besonders bevorzugt in einem Zwischentank, in dem die in den Anodenkreislauf wieder einzuspeisende Flüssigkeit zwischengespeichert wird.

In einer Weiterbildung der zuvor beschriebenen Verfahren werden die nach dem Kondensationsvorgang übrigbleibenden Abgase - falls nur die kathodenseitigen Gase durch eine Kondensationseinrichtung geführt wurden, werden diese mit den anodenseitigen Abgasen vermischt - auf die Temperatur der Brennstoffzellenvorrichtung des Brennstoffzellensystems erwärmt, z.B. im Gegenstromverfahren mit den Anoden- und oder Kathodenströmungen, wodurch die relative Feuchte unter den Sättigungswert gesenkt wird, und anschließend durch einen Katalytbrenner geführt, in dem Brennstoffreste und Zwischenprodukte "verbrannt" werden, um den Schadstoffgehalt der Emissionen zu reduzieren. Diese Vorgehensweise ist bei den herkömmlichen Verfahren nicht möglich, da dort die Abgase im wesentliche die gleiche Temperatur wie das System selbst haben, so dass ein ausreichendes Herabsenken der relativen Feuchte nur durch eine separate Heizungseinrichtung und/oder Beheizen des Katalytbrenners möglich ist.

Vorzugsweise kann der Katalytbrenner direkt und in thermischen Kontakt an einer Brennstoffzellenvorrichtung angebracht werden und dadurch aufgeheizt werden.

Das erfindungsgemäße Brennstoffzellensystem umfasst eine Brennstoffzellenvorrichtung, eine Einrichtung zum Ermitteln einer für die Flüssigkeitsmenge und/oder Änderungen der Flüssigkeitsmenge im Brennstoffzellensystem charakteristischen Messgröße, wenigstens eine Kondensationseinrichtung, um wenigstens aus kathodenseitig abgegebenen Gasen Flüssigkeit auszukondensieren, eine Steuereinrichtung, um die Kühlleistung der wenigstens einen Kondensationseinrichtung und/oder den kathodenseitigen Volumenstrom in Abhängigkeit von der ermittelten charakteristischen Messgröße einzustellen, und eine Einrichtung zum Zuführen der auskondensierten Flüssigkeit in den Anodenkreislauf des Brennstoffzellensystems.

Die Vorteile dieses Systems wurden schon ausführlich unter Bezugnahme auf die entsprechenden Verfahren diskutiert, so dass eine Wiederholung als unnötig erachtet wird.

In einer besonders bevorzugten Weiterbildung umfasst das System eine Wärmetauscheinrichtung zum Erwärmen von Gasen an der Brennstoffzellenvorrichtung. Zusätzlich oder alternativ kann ein Katalytbrenner an oder in der Brennstoffzellenvorrichtung vorgesehen sein, und somit durch die Brennstoffzellenvorrichtung aufgeheizt werden. Vor allem bei der Anbringung in der Brennstoffzellenvorrichtung können den Katalytbrenner durchlaufende Gase im Gegenstromverfahren durch die Anoden- und/oder Kathodenfluide aufgeheizt werden.

Auch die Vorteile dieser bevorzugten Weiterbildungen wurden schon unter den entsprechenden Verfahren diskutiert. Zur Vermeidung von Wiederholungen wird nach oben verwiesen.

Weitere Besonderheiten und Voreile der Erfindung werden nachfolgend unter Bezugnahme auf die Figur anhand von besonders bevorzugten Ausführungsformen erläutert.

Es zeigen:
- Fig. 1:: den schematischen Aufbau eines DMFC-Systems (interner Stand der Technik).
- Fig. 2:: eine Anordnung eines Brennstoffzellensystems zur Anwendung einer ersten bevorzugten Variante des erfindungsgemäßen Verfahrens;
- Fig. 3:: eine Anordnung eines Brennstoffzellensystems zur Anwendung einer zweiten bevorzugten Variante des erfindungsgemäßen Verfahrens;
- Fig. 4:: eine Anordnung eines Brennstoffzellensystems zur Anwendung einer dritten bevorzugten Variante des erfindungsgemäßen Verfahrens;
- Fig. 5:: einen Katalytbrenner in thermischem Kontakt mit einer Brennstoffzellenvorrichtung
- Fig. 6:: ein im Anodenkreislauf vorgesehenes Steigrohr mit einer Messeinrichtung zum Ermitteln von Änderungen im Flüssigkeitshaushalt;
- Fig. 7:: eine Brennstoffzellensystem mit einem Zwischentank mit einem Füllstandssensor.

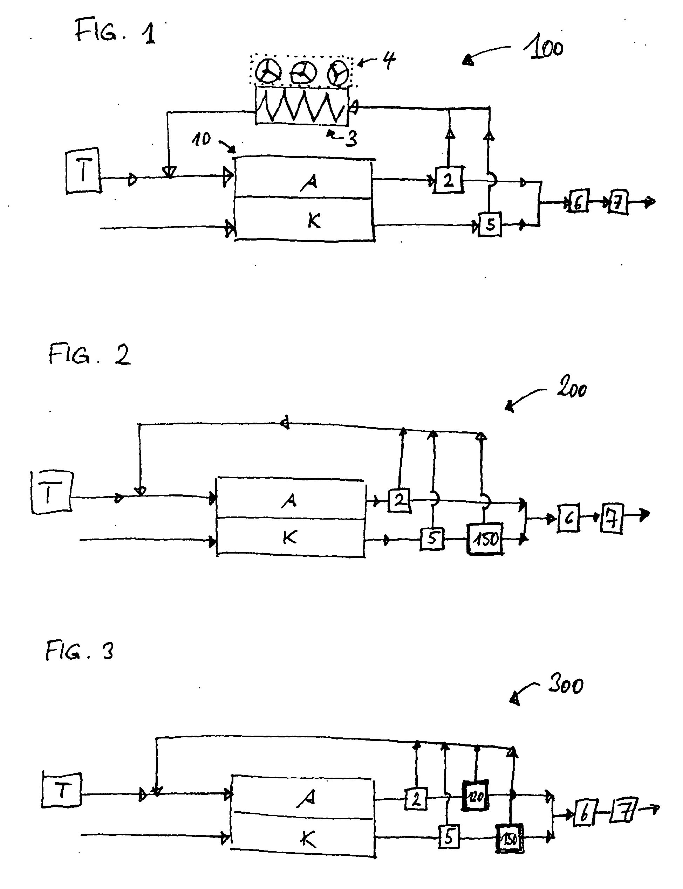

Figur 1 zeigt den schematischen Aufbau eines DMFC (Direct Methanol Fuel Cell) -Systems 100, das auf herkömmliche Art und Weise (wie einleitend beschrieben) gekühlt wird.

Der Anode A der Direkt-Methanol-Brennstoffzelle 10 wird ein Brennstoffgemisch aus in Wasser gelöstem Methanol zugeführt, das beim Durchgang durch die Zelle an Methanol abgereichert wird, und als Anodenfluid mit flüssigen Anteilen und gasförmigen Anteilen die Anode A verlässt. In einer Trennvorrichtung 2 werden die flüssigen Anteile von den gasförmigen Anteilen getrennt, durch eine Kühlvorrichtung (Wärmetauscher) 3 gekühlt, mit Methanol aus einer Brennstoffversorgungseinrichtung T angereichert, und wieder der Anode A zugeführt.

Somit wird der anodenseitige Flüssigkeitskreislauf zum Kühlen des gesamten Systems 100 verwendet: Der auf Umgebungstemperatur befindliche Wärmetauscher 3 kühlt die am Anodenausgang abgegebene Flüssigkeit ab, bevor diese dem Anodeneingang wieder zugeführt wird.

Bei einem kompakten DMFC-System im kleinen Leistungsbereich beträgt die mittlere Systemtemperatur bei der gezeigten Anordnung etwa 60°C. Bei einer angenommenen "normalen" Umgebungstemperatur von 20°C beträgt die Temperaturdifferenz zur Umgebung nur 40°C, was schon erhebliche Anforderungen an den Wärmetauscher 3 stellt, dessen Effektivität entscheidend von der Größe dieser Temperaturdifferenz abhängt.

Um bei solch geringen Temperaturdifferenzen überhaupt eine ausreichende Wärmeabfuhr bewirken zu können, müssen die Wärmetauscher 3 entsprechend groß dimensioniert und mit leistungsfähigen Lüftern 4 versehen werden.

Bei höheren Umgebungstemperaturen, die durchaus 40°C erreichen und übertreffen können (beispielsweise in schlecht gelüfteten und/oder geschlossenen Räumen oder in der Sonne), können u.U. auch die leistungsfähigsten Lüfter 4 und Wärmetauscher 3 keine ausreichenden Wärmeabfuhr mehr gewährleisten. Aus sicherheitstechnischen Gründen und um die Brennstoffzelle vor Zerstörung zu schützen, wird daher in der Regel herstellerseitig eine maximale Umgebungstemperatur festgelegt, oberhalb der das System nicht mehr betrieben werden darf.

An der Kathode K wird Sauerstoff zugeführt, i.d.R. durch Zufuhr von Umgebungsluft. Bei Durchgang durch den Kathodenraum wird der Sauerstoffanteil des zugeführten Gasgemischs reduziert; dafür wird kathodenseitig als Reaktionsprodukt entstehendes bzw. von der Anode A zu Kathode K gelangendes Wasser aufgenommen, so dass ein schließlich ein Kathodenfluid abgegeben wird, das nicht verwertbare Luftbestandteile, und Wasser enthält, und aufgrund von Diffusion auch CO₂ und Methanol (bzw. Derivate und Reaktions-Zwischenprodukte) umfassen kann.

Auch das ausgangseitig anfallende Kathodenfluid umfasst flüssige und gasförmige Anteile, die in einer weiteren Trennvorrichtung 5 voneinander getrennt werden. Die Flüssigkeit bestehet hauptsächlich aus Wasser und wird in den Anodenkreislauf übergeführt, um die Wasserbilanz des Systems 100 zu wahren.

Die durch die Flüssigkeitsabtrennung erhaltenen kathoden- und anodenseitigen Gase werden als Abgase abgegeben. Neben Wasserdampf umfassen die kathodenseitigen Abgase die folgenden Stoffe: nicht-oxidierbare Luftbestandteile und Restsauerstoff, sowie Kohlendioxid und Brennstoff und/oder Brennstoff-Derivate, die von der Anodenseite zur Kathodenseite diffundieren können, die anodenseitigen Abgase: Kohlendioxid (als Hauptkomponente) und unverbrauchten Brennstoff und (als Folge von unvollständigen oder parasitären Reaktionen erhaltene) Derivate.

Die Abgabe von unverbrauchtem Brennstoff (oder Derivaten) an die Umgebung ist aus gesundheitlichen und sicherheitstechnischen Gründen inakzeptabel und muss vermieden werden. Um solche Emissionen zu eliminieren, werden in der Technik sogenannte Katalytbrenner 7 eingesetzt, die unverbrauchten Brennstoff und organische Nebenprodukte mit dem Restsauerstoff oxidieren.

Die Abgase sind aber i.d.R. immer noch mit Wasserdampf gesättigt, d.h. die relative Feuchte dieser Abgase beträgt in etwa 100%. Da aber bei einer relativen Feuchte von 100 % ein Katalytbrenner 7 nahezu wirkungslos ist (bei einer so hohen Feuchtigkeit kondensiert in der Praxis stets etwas Wasser aus und blockiert die aktive Katalysatorfläche), muss der zu reinigende Abluftstrom bei und/oder vor dem Durchgang durch den Katalytbrenner 7 mit einer Heizeinrichtung 6 erwärmt werden, um die relative Feuchte der Abgase auf einen Wert deutlich unter 100% herabzusetzen.

Sowohl zur Kühlung des Anodenkreislaufs (Lüfter!), als auch zum Erwärmen der Abgase (oder alternativ: des Katalytbrenners) ist Energie notwendig, die den Gesamtwirkungsgrad des Systems 100 herabsenken.

Figur 2 zeigt den schematischen Aufbau eines DMFC-Systems 200, bei dem der Wasserhaushalt gemäß den Prinzipien der vorliegenden Erfindung gesteuert wird. Gleiche Merkmale wurden dabei mit denselben Bezugszeichen wie in Fig. 1 versehen. Unnötige Wiederholungen werden soweit wie möglich vermieden.

Das beim Durchgang durch die Anode A der Brennstoffzelle des DMFC-Systems 200 abgereicherte Brennstoffgemisch verlässt als Anodenfluid mit flüssigen Anteilen und gasförmigen Anteilen die Anode A. Es folgt eine Separation der flüssigen Phasenanteile von den gasförmigen, wobei letztere wieder zum Anodeneingang rückgeführt werden.

Der Fluidstrom, der ausgangseitig an der Kathode K anfällt, durchläuft die Trennvorrichtung 5 und anschließend eine Kondensationsvorrichtung 150: im Unterschied zur Trennvorrichtung 5 bewirkt letztere nicht ein bloßes Separieren der flüssigen und gasförmigen Anteile, sondern erhöht die Flüssigkeitsmenge auf Kosten der Gasmenge, wobei in erster Linie mehr flüssiges Wasser anfällt. Die gesamte Flüssigkeitsmenge, also die (falls vorhanden) schon in flüssiger Form ausgegebenen Anteile des Kathodenfluids und die durch die Kondensationsvorrichtung 150 auskondensierte Flüssigkeitsmenge, werden in den Anodenkreislauf eingespeist.

Trotz fehlender anodenseitiger Kühlvorrichtung 3 ergibt sich eine ausreichende Kühlung des Systems 200, die im wesentlichen auf folgenden Effekten basiert:
- Einspeisen der auskondensierte Flüssigkeitsmenge in den Anodenkreislauf; diese Flüssigkeit weist aufgrund des Kondensationsvorgangs eine niedrigere Temperatur als das System auf.
- Verdampfungskühlung auf der Kathodenseite, die darauf basiert, dass ein Teil des kathodenseitig entstehenden bzw. zur Kathodenseite diffundierenden Wassers verdampft.

Legt man als Anschauungsbeispiel wieder ein kompaktes DMFC-System im kleinen Leistungsbereich zugrunde, so beträgt bei der in Fig. 2 gezeigten Anordnung die mittlere Systemtemperatur (d.h. Temperatur des Anodenfluids in der Zelle) etwa 80°C (verglichen mit etwa 60°C bei der in Fig. 1 gezeigten Anordnung und sonst gleichen Leistungsdaten).

Bei einer angenommenen "normalen" Umgebungstemperatur von 20°C beträgt die Temperaturdifferenz zur Umgebung nun immerhin 60°C. Dies bedeutet: wenn die Kondensation in der Kondensationsvorrichtung 150 auf Wärmetausch mit der Umgebung basiert, so steht als treibende Kraft für den Wärmetausch eine deutlich erhöhte Temperaturdifferenz zur Verfügung. Die Wärmetauscher der Kondensationsvorrichtung 150 können also kleiner dimensioniert und/oder mit weniger leistungsfähigen Lüftern versehen werden, als bei der Kühlvorrichtung 3 von Fig. 1.

Selbst bei einer hohen Umgebungstemperatur von 40°C sind die Anforderungen an den Wärmetauscher noch vergleichbar zu denen bei der in Fig. 1 unter Normalbedingung, d.h. bei 20°C. Durch die erfindungsgemäße Anordnung ist also ein Betreiben des DMFC-Systems 200 bei höheren Temperaturen möglich.

Die erfindungsgemäß erreichten Effekte sind aber nicht nur vorteilhaft im Hinblick auf den Flüssigkeitshaushalt, sondem haben auch Konsequenzen für die Abgase:

Im Vergleich zu Fig. 1 haben diese Abgase bei der Anordnung von Fig. 2 unmittelbar nach dem Austritt aus dem System eine höhere Temperatur.

Die Gastemperatur ändert sich in Fig. 1 beim Gas/Flüssigkeits-Separationsvorgang nicht oder allenfalls unwesentlich. Dies gilt zwar auch für die anodenseitigen Abgase bei der in Fig. 2 gezeigten Anordnung, die kathodenseitigen Abgase aber erfahren aufgrund der Kondensationskühlung eine Temperaturabnahme.

Führt man die kathodenseitigen Abgase und anodenseitigen Abgase zusammen, so stellt sich eine mittlere Gastemperatur ein, die unter der Systemtemperatur liegt. Auch diese Abgase sind immer noch mit Wasserdampf gesättigt, so dass das einfache Verbrennen von Brennstoffrückständen mit einem Katalytbrenner 7 nicht möglich ist.

Bei der in Fig. 2 gezeigten Anordnung ist - wie auch in der vorhergehenden Anordnung von Fig. 1 und der nachfolgenden Anordnung von Fig. 3 - daher ein Heizer 6 vorgesehen, mit dem die Temperatur der Abgase erhöht und damit die relative Feuchte unter den Sättigungswert gesenkt wird.

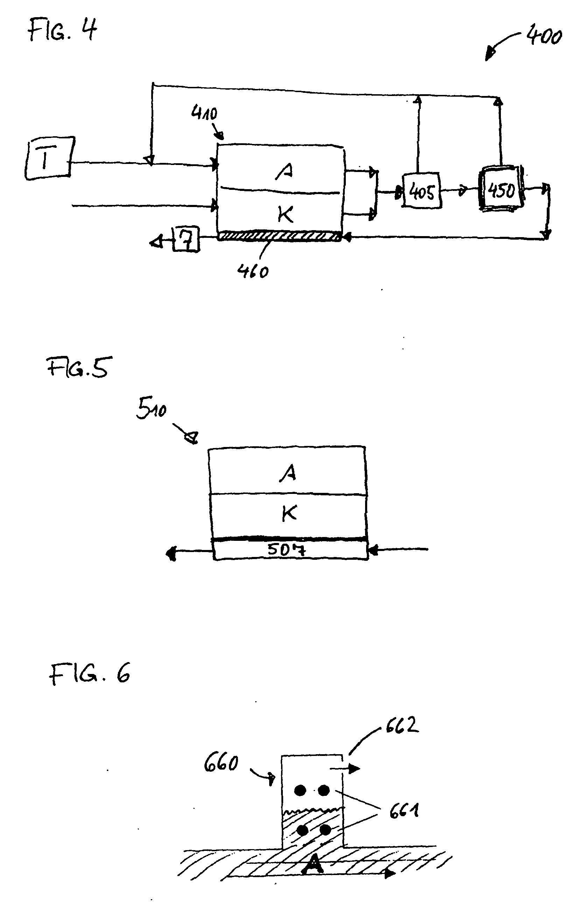

In einer besonders bevorzugten Variante der Erfindung wäre es aber hier (Fig. 2) und bei der Anordnung von Fig. 3 - aber nicht bei der Anordnung von Fig. 1 ! - möglich, diese Abgase in Kontakt mit der Brennstoffzelle, beispielweise im Gegenstrom, wieder aufzuwärmen und dadurch die relative Feuchte des Abgasgemisches unter den Sättigungswert zu bringen und anschließend dem Katalytbrenner 7 zuzuführen, ohne dass hierfür ein separater ein Heizer 6 erforderlich wäre. Diese Variante ist in der Figur nur durch die Fig. 4 und 5 angedeutet, es versteht sich aber von selbst, dass entsprechende Modifikationen auch bei den Anordnungen von Fig. 2 und 3 durchgeführt werden können.

Mit der in Fig. 2 gezeigten Anordnung wird gegenüber der Anordnung von Fig. 1 u.a. der Vorteil erzielt, dass bei ansonsten vergleichbaren Systembedingungen die Temperaturdifferenz zwischen System und Umgebung bei der Anordnung (Fig. 2) gemäß den Prinzipien der vorliegenden Erfindung größer ist als bei der herkömmlichen Anordnung (Fig. 1). Dies ist im vorliegenden Fall ein Vorteil, da die entscheidende Größe für die Effizienz einer Wärmeabfuhr die Temperaturdifferenz zwischen Wärmequelle (System) und Wärmesenke (Umgebung) ist. Die Systemtemperatur ist aber gleichzeitig nicht so stark erhöht, dass Betriebsbeeinträchtigungen zu befürchten wären oder mit verkürzten Lebensdauer gerechnet werden müsste.

Die Figuren 3 und 4 zeigen dienen zur Veranschaulichung von besonders bevorzugten Weiterbildungen des erfindungsgemäßen Verfahrens: Gleiche Merkmale wurden dabei mit denselben Bezugszeichen wie in Fig. 1 bzw. 2 versehen. Wiederholungen der Beschreibung werden soweit wie möglich vermieden.

Beim DMFC-System 300 von Fig. 3 durchläuft (in Erweiterung des in Fig. 2 veranschaulichten Verfahrens) auch der anodenseitige Fluidstrom nach dem Passieren der Trennvorrichtung 2 eine Kondensationsvorrichtung 120.

Ähnliches trifft auch auf das DMFC-System 400 von Fig. 4 zu, wobei allerdings hier die anodenseitigen und kathodenseitigen Fluid nach Verlasen der Brennstoffzellenvorrichtung 410 zusammengeführt werden und eine gemeinsame Trennvorrichtung 405 und eine gemeinsame Kondensationsvorrichtung 450 durchlaufen.

Die so gewonnene Flüssigkeit wird in den Anodenkreislauf gespeist. Die Gasphase wird in einer Gegenstromeinrichtung 460, die in Kontakt mit der Brennstoffzellenvorrichtung 410 ist (bevorzugt sogar als integraler Bestandteil derselben ausgebildet ist), erwärmt und dadurch wieder in etwa auf Systemtemperatur gebracht. Dadurch wird die relative Feuchte des Gases unter den Sättigungswert reduziert, so dass es direkt einem Katalytbrenner 7 zugeführt werden kann. (Dieser Verfahrensschritt kann ohne weiteres auch in die in Fig. 2 und 3 gezeigten Anordnungen implementiert werden.) Der skizzierten Anordnung der Gegenstromeinrichtung 460 in Nachbarschaft der Kathode K ist keine besondere Bedeutung beizumessen; vielmehr kann die Gegenstromeinrichtung 460 auch an die Anode A angrenzen oder innerhalb der Brennstoffzellenvorrichtung 410 vorgesehen sein. Die zuletzt erwähnte Anordnung ist häufig wegen der verkleinerten und vereinfachten Bauweise der skizzierten Anordnung vorzuziehen.

Fig. 5 zeigt eine alternative Anordnung, bei der der Katalytbrenner 507 durch Kontakt mit der Brennstoffzellenvorrichtung 510 aufgeheizt wird. Da die Gase beim Eintritt in den Katalytbrenner 507 relativ schnell erwärmt werden, kann durch diese Anordnung die Notwendigkeit eines Vorerwärmens der Gase entfallen, so dass weder ein separater Heizer noch eine Gegenstromeinrichtung erforderlich ist. Wiederum kann es vorteilhaft sein, wenn der Katalytbrenner in Kontakt mit Anodenbereichen steht und/oder integraler in die Brennstoffzelle integriert ist.
Fig. 6 zeigt ein im Anodenkreislauf vorgesehenes Steigrohr 660 mit einer Messeinrichtung zum Ermitteln von Änderungen im Flüssigkeitshaushalt. Eine solche Einrichtung ist vorteilhaft, da die Höhe einer Flüssigkeitssäule deutlich leichter zu messen ist als der Massenstrom einer Flüssigkeit.

Falls der Füllstand im Anodenkreislauf steigt, so ist dies ein Zeichen dafür, dass die aktuelle Flüssigkeitsbilanz positiv ist und die Wasserabfuhr aus dem System erhöht werden muss. Dies kann durch Reduzieren der Leistung der Kondensationseinrichtungen (bzw. der mit ihnen assoziierten Lüfter) geschehen, aber auch durch Erhöhen des kathodenseitigen Volumenstroms, was ebenfalls eine höhere Flüssigkeitsabgabe an die Umgebung bewirkt.

Bei dem in Fig. 6 gezeigten Beispiel umfasst die Messeinrichtung elektrische Kontaktpaare 661, die durch das leitfähige kohlensäurehaltige Anodenfluid kurzgeschlossen werden können. Mehrere Paare solcher Kontakte sind derart übereinander angeordnet, dass verschiedenen Niveaus des Flüssigkeitsspiegels unterscheidbar sind. So kann z.B. aus der Anzahl leitender bzw. nicht-leitender Kontaktpaare indirekt auf die vorhandene Wassermenge geschlossen werden. An der Oberseite des Steigrohrs ist eine flüssigkeitsundurchlässige Vorrichtung zum Druckausgleich vorgesehen, z.B. eine semipermeable Membran.

Alternative Messverfahren sind:

Optische Verfahren, beispielsweise unter Verwendung von Lichtschranken. Dabei wird durch eine oder mehrere Lichtschranken der Füllstand im Anodenkreislauf überwacht. Diese Lichtschranken erkennen aufgrund der unterschiedlichen Eigenschaften von Gas bzw. Flüssigkeit, ob und bis zu welcher Höhe eine Flüssigkeit vorhanden ist.

Kapazitive Verfahren, die darauf basieren, dass die Dielektrizitätszahlen der Gase (ε ≈1) und der Anodenflüssigkeiten (i.d.R. wässrige Brennstofflösungen: ε ≈ 80) sehr unterschiedlich sind. So kann durch geeignete Anordnung zweier Kondensatorplatten im Anodenkreislauf die Steighöhe der Flüssigkeit im Kondensator anhand der ermittelten Kapazität bestimmte werden.

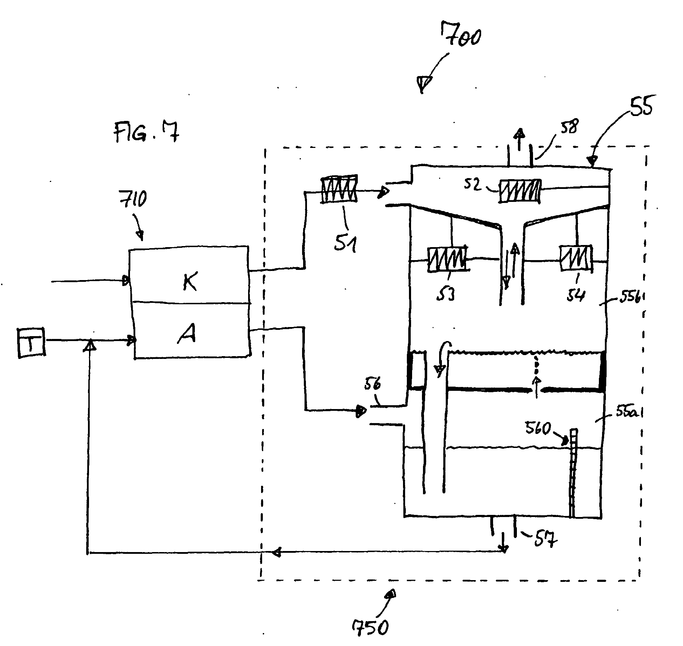

Fig. 7 ist ein Spezialfall der in Fig. 3 gezeigten Anordnung, wobei die Trenneinrichtung 105 und die Kondensationseinrichtung 450 von Fig. 3 zu einer Fluidtrenneinheit 750 zusammengefasst sind.

Die Fluidtrenneinheit 750 weist als wesentliche Elemente Kondensationseinrichtungen 51, 52, 53, 54 und eine Trennkammer 55 zur Zufuhr von Kathoden- und Anodenfluiden auf.

Wie skizziert, können die Kondensationseinrichtungen (z.B. Wärmetauscher) 51, 52, 53, 54 innerhalb und außerhalb (vor) der Trennkammer 55 vorgesehen sein. Es ist aber auch möglich, eine einzige, leistungsfähige Kondensationseinrichtung zwischen dem Kathodenausgang und der Trennkammer 55 vorzusehen, oder aber die Kondensationseinrichtungen ausschließlich in und/oder an den Außenwänden der Trennkammer vorzusehen.

Die Trennkammer 55 ist in zwei Fluidkammern 55a, 55b unterteilt: Die untere Fluidkammer 55a eine in den oberen Bereich der Kammer mündende, anodenseitige Fluidzufuhreinrichtung 56 und eine Flüssigkeitsabfuhreinrichtung 57 auf.
Die obere Fluidkammer 55b weist eine kathodenseitige Fluidzufuhreinrichtung 51 auf, über das Gas/Flüssigkeits-Gemisch aus Kathodenkammer der Brennstoffzellenvorrichtung 710 zugeführt werden kann, sowie eine Gasabfuhreinrichtung 58, an der z.B. ein Katalytbrenner (nicht gezeigt) angeschlossen sein kann.

Durch Zusammenwirken von Schwerkraft, stark reduzierter Strömungsgeschwindigkeit und Kondensationseinrichtung 52 erfolgt im oberen Bereich der Kammer 55b eine teilweises Auskondensieren von Flüssigkeit und eine räumliche Trennung der gasförmigen und flüssigen Phasenanteile, wobei erstere über die Gasabfuhreinrichtung 58 abgeführt werden können, letztere über eine trichterförmige Abflusseinrichtung nach unten abgeleitet werden.

Die beiden Fluidkammern 55a, 55b sind durch eine wannenartige Flüssigkeitsauffangeinrichtung voneinander getrennt, die ein in die untere Kammer 55a mündendes Überlaufrohr aufweist, so dass flüssige Stoffe, die über Abflusseinrichtung nach unten abgeleitet werden, durch die Flüssigkeitsauffangeinrichtung teilweise aufgefangen werden und erst ab einen bestimmten Füllstand (mit Überschreiten der Oberkante des Überlaufrohrs) in die untere Fluidkammer 55a strömen können.

Gasförmige Stoffe, die mit dem über die Fluidzufuhreinrichtung 56 zugeführtem Anodenfluid in die untere Fluidkammer 55a gelangen, können über eine Bohrung in der Flüssigkeitsauffangeinrichtung nach oben entweichen, müssen dabei aber die darin aufgefangene Flüssigkeit durchqueren. Dabei können Gaskomponenten wie Methanol in Lösung gehen und über das Überlaufrohr der Flüssigkeit in der unteren Fluidkammer 55a zugeführt werden. Die so gereinigten Abgase strömen über das Trichterrohr nach oben in Richtung Gasabfuhreinrichtung 58.

In der unteren Fluidkammer 55a ist ferner eine Füllstandmesseinrichtung 560 vorgesehen, die das Niveau der Flüssigkeitsoberfläche ermittelt. Da die Flüssigkeit aufgrund des darin gelösten CO₂ elektrisch leitfähig ist, kann die Füllstandmessung über die Leitfähigkeit erfolgen: beispielsweise können auf unterschiedlichen Niveaus Elektrodenpaare vorgesehen sein, die durch die Flüssigkeit kurzgeschlossen werden. Alternativ dazu könnten die Kapazitäten von Kondensatoren bzw. die Kapazitätsänderungen als Messgröße verwendet werden. Technisch einfach realisierbar sind auch optische Messmethoden, die auf den unterschiedlichen optischen Eigenschaften der Gasphase und der Flüssigkeit beruhen; zu diesen Eigenschaften gehören: Brechungsindex, Absorption, Transmission. So können beispielsweise paarweise angeordnete Diodenpaare vorgesehen werden, von denen jeweils eine als Sende- und die andere als Empfängerdiode fungiert und mit denen festgestellt werden kann, ob sich zwischen ihnen Flüssigkeit befindet.

Mit der in Fig. 7 gezeigten Trennkammer 55 ist somit nicht nur eine sehr effektive Abgasreinigung möglich, sondern es kann anhand der Füllstandsmessung auch verfolgt werden, ob die Flüssigkeitsmenge im Anodenkreislauf abnimmt, konstant ist, oder zunimmt. Bei Änderungen können entsprechende Gegenmaßnahmen getroffen werden.

Die in den Figuren skizzierten Ausführungsbeispiele dienen lediglich zur Veranschaulichung der Erfindung. Der Schutzbereich der Erfindung wird allein durch die nachfolgenden Patentansprüche definiert.

## Patentansprüche

1. Ein Verfahren zur Steuerung des Fluidhaushalts in einem Anodenkreislauf eines Brennstoffzellensystems (200), umfassend:
Kühlen von kathodenseitig abgegebenen Gasen in einer Kondensationseinrichtung (150), um Flüssigkeit auszukondensieren, und
Zuführen der auskondensierten Flüssigkeit in den Anodenkreislauf des Brennstofftellensystems (200),
**gekennzeichnet durch**
Ermitteln einer für die Flüssigkeitsmenge und/oder Änderungen der Flüssigkeitsmenge im Anodenkreislauf des Brennstoffzellensystems (200) charakteristischen Messgröße, und
Einstellen der Kühlleistung der Kondensationseinrichtung (150) und/oder Einstellen des kathodenseitigen Volumenstroms in Abhängigkeit von der ermittelten charakteristischen Messgröße.

2. Ein Verfahren zur Steuerung des Fluidhaushalts in einem Anodenkreislauf eines Brennstoffzellensystems (400) nach Anspruch 1, weiterhin umfassend:
Kühlen von anodenseitig abgegebenen Gasen in der Kondensationseinrichtung (450), um Flüssigkeit auszukondensieren.

3. Ein Verfahren zur Steuerung des Fluidhaushalts in einem Anodenkreislauf eines Brennstoffzellensystems (300) nach Anspruch 1, weiterhin umfassend:
Einstellen der Kühlleistung einer weiteren Kondensationseinrichtung (120) in Abhängigkeit von der ermittelten charakteristischen Messgröße,
Kühlen von anodenseitig abgegebenen Gasen in der weiteren Kondensationseinrichtung (120), um eine weitere Flüssigkeit auszukondensieren,
Zuführen der weiteren auskondensierten Flüssigkeit in den Anodenkreislauf des Brennstoffzellensystems (300).

4. Ein Verfahren nach einem der Ansprüche 1 bis 3, umfassend:
Erwärmen der nach dem Kondensationsvorgang übrigbleibenden Abgase an der Brennstoffzellenvorrichtung (410) des Brennstoffzellensystems (400),
Durchführen der erwärmten Abgase durch einen Katalytbrenner (7).

5. Ein Verfahren nach einem der Ansprüche 1 bis 3, umfassend:
Anbringen eines Katalytbrenners (507) an einer 8rennstoffzellenvorrichtung (510),
Durchführen der nach dem Kondensationsvorgang übrigbleibenden Abgase durch den Katalytbrenner (507).

6. Ein Brennstoffzellensystem (700), umfassend:
eine Brennstoffzellenvorrichtung (710),
eine Einrichtung (560, 660) zum Ermitteln einer für die Flüssigkeitsmenge und/oder Änderungen der Flüssigkeitsmenge im Brennstoffzellensystem (200) charakteristischen Messgröße,
wenigstens eine Kondensationseinrichtung (120, 150), um wenigstens aus kathodenseitig abgegebenen Gasen Flüssigkeit auszukondensieren,
eine Steuereinrichtung zum Einstellen der Kühlleistung der wenigstens einen Kondensationseinrichtung (120, 150) und/oder zum Einstellen des kathodenseitigen Volumenstroms in Abhängigkeit von der ermittelten charakteristischen Messgröße,
eine Einrichtung zum Zuführen der auskondensierten Flüssigkeit in den Anodenkreislauf des Brennstoffzellensystems.

7. Ein Brennstoffzellensystem nach Anspruch 6, umfassend:
eine Wärmetauscheinrichtung (460) zum Erwärmen von Gasen an der Brennstoffzellenvorrichtung (410).

8. Ein Brennstoffzellensystem nach einem der Ansprüche 6 und 7, umfassend:
einen Katalytbrenner (507), der an oder in der Brennstoffzellenvorrichtung (510) vorgesehen ist.

## Claims

1. Method for controlling the fluid balance in an anode circuit of a fuel cell system (200), comprising:
cooling gases discharged on the cathode side in a condensing device (150) in order to obtain a condensed liquid, and
feeding the condensed liquid into the anode circuit of the fuel cell system (200)
**characterized by**
determining a measured quantity characteristic of the amount of liquid and/or changes in the amount of liquid in the anode circuit of the fuel cell system (200), and
adjusting the cooling capacity of the condensing device (150) and/or adjusting the volume flow rate on the cathode side in response to the determined measured quantity.

2. Method for controlling the fluid balance in an anode circuit of a fuel cell system (400) according to claim 1, further comprising:
cooling gases discharged on the anode side in the condensing device (450) in order to obtain a condensed liquid.

3. Method for controlling the fluid balance in an anode circuit of a fuel cell system (300) according to claim 1, further comprising:
adjusting the cooling capacity of a further condensing device (120) in response to the determined characteristic measured quantity,
cooling gases discharged on the anode side in the further condensing device (120) in order to obtain a further condensed liquid
feeding the further condensed liquid into the anode circuit of the fuel cell system (300).

4. Method according to one of claims 1 to 3, comprising:
heating the waste gases remaining after the condensation procedure at the fuel cell device (410) of the fuel cell system (400),
passing the heated waste gases through a catalytic burner (7).

5. Method according to one of claims 1 to 3, comprising:
mounting a catalytic burner (507) at a fuel cell device (510),
passing the waste gases remaining after the condensation procedure through the catalytic burner (507).

6. Fuel cell system (700), comprising:
a fuel cell device (710),
a device (560, 660) for determining a measured quantity characteristic of the amount of liquid and/or changes of the amount of liquid in the fuel cell system (200),
at least one condensing device (120, 150) for obtaining a condensed liquid at least from gases discharged on the cathode side,
a controller for adjusting the cooling capacity of the at least one condensing device (120, 150) and/or for adjusting the volume flow rate on the cathode side in response to the determined characteristic measured quantity, and
a device for feeding the condensed liquid to the anode circuit of the fuel cell system,

7. Fuel cell system according to claim 6, comprising:
a heat exchange device (460) for heating gases at the fuel cell device (410).

8. Fuel cell system according to one of claims 6 and 7, comprising:
a catalytic burner (507) provided at or in the fuel cell device (510).

## Revendications

1. Procédé de contrôle du régime des fluides dans un circuit d'anodes d'un système de piles à combustible (200), comprenant :
le refroidissement de gaz restitués côté cathode dans un dispositif de condensation (150), pour éliminer du liquide par condensation et
l'alimentation du liquide éliminé par condensation dans le circuit d'anodes du système de piles à combustible (200),
**caractérisé par**
la détermination d'une dimension de mesure caractéristique pour la quantité de liquide et/ou des modifications de la quantité de liquide dans le circuit d'anodes du système de piles à combustible (200), et
le réglage de la puissance frigorifique du dispositif de condensation (150) et/ou le réglage du débit volumétrique côté cathode, en fonction de la dimension de mesure caractéristique déterminée.

2. Procédé de contrôle du régime de fluides dans un circuit d'anodes d'un système de piles à combustible (400) selon la revendication 1, comprenant par ailleurs :
le refroidissement de gaz restitués côté anode dans le dispositif de condensation (450), pour éliminer un liquide par condensation.

3. Procédé de contrôle du régime de fluides dans un circuit d'anodes d'un système de piles à combustible (300) selon la revendication 1, comprenant par ailleurs :
le réglage de la puissance frigorifique d'un dispositif de condensation supplémentaire (120) en fonction des dimensions de mesure caractéristiques déterminées,
le refroidissement de gaz restitués côté anode dans le dispositif de condensation supplémentaire (120), pour éliminer un liquide supplémentaire par condensation,
l'alimentation du liquide supplémentaire éliminé par condensation dans le circuit d'anodes du système de piles à combustible (300).

4. Procédé.selon;!'une des revendications 1 à 3, comprenant :
l'échauffement des gaz d'échappement résiduels après le processus de condensation sur le dispositif de piles à combustible (410) du système de piles à combustible (400),
le guidage des gaz d'échappement échauffés à travers un brûleur catalytique (7).

5. Procédé selon l'une quelconque revendications 1 à 3, comprenant :
le montage d'un brûleur catalytique (507) sur un dispositif de piles à combustible (510),
le guidage des gaz d'échappement échauffés à travers le brûleur catalytique (507).

6. Système de piles à combustible (700) comprenant :
un dispositif de piles à combustible (710),
un dispositif (560, 660) pour déterminer une dimension de mesure caractéristique pour la quantité de liquide et/ou des modifications de la quantité de liquide dans le système de piles à combustible (200),
au moins un dispositif de condensation (120, 150) pour au moins éliminer par condensation du liquide les gaz restitués côté cathode,
un dispositif de contrôle pour le réglage de la puissance frigorifique d'au moins le dispositif de condensation (120, 150) et/ou pour le réglage du débit volumétrique côté cathode, en fonction de la dimension de mesure caractéristique déterminée,
un dispositif pour l'alimentation du liquide éliminé par condensation dans le circuit d'anodes du système de piles à combustible.

7. Système de piles à combustible selon la revendication 6, comprenant :
un dispositif d'échangeur thermique (460) pour échauffer des gaz sur le dispositif de piles à combustibles (410).

8. Système de piles à combustible selon l'une quelconque des revendications 6 et 7, comprenant :
un brûleur catalytique (507) qui est prévu sur ou dans le dispositif de piles à combustible (510).
